(19) Europäisches Patentamt
European Patent Office
Office européen des brevets

(11) EP 0 726 285 B1

(12) **EUROPÄISCHE PATENTSCHRIFT**

(45) Veröffentlichungstag und Bekanntmachung des Hinweises auf die Patenterteilung:
**26.09.2001 Patentblatt 2001/39**

(51) Int Cl.[7]: **C08G 64/30**

(21) Anmeldenummer: **96101302.6**

(22) Anmeldetag: **31.01.1996**

(54) **Zweistufen-Verfahren zur Herstellung von thermoplastischem Polycarbonat**

Two-step process for the production of thermoplastic polycarbonate

Procédé en deux étapes pour la préparation de polycarbonate thermoplastique

(84) Benannte Vertragsstaaten:
**BE DE ES GB IT NL**

(30) Priorität: **13.02.1995 DE 19504622**

(43) Veröffentlichungstag der Anmeldung:
**14.08.1996 Patentblatt 1996/33**

(73) Patentinhaber: **BAYER AG**
**51368 Leverkusen (DE)**

(72) Erfinder:
- **Kühling, Steffen, Dr.**
  **D-40670 Meerbusch (DE)**
- **Hucks, Uwe**
  **D-46519 Alpen (DE)**
- **Zaby, Gottfried, Dr.**
  **D-51375 Leverkusen (DE)**
- **Wulff, Claus, Dr.**
  **D-47800 Krefeld (DE)**

(56) Entgegenhaltungen:
**EP-A- 0 481 296**
**EP-A- 0 529 093**
**DE-A- 2 439 552**
**DE-A- 4 238 123**
**DE-A- 4 312 390**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein Zweistufen-Schmelzeverfahren zur Herstellung von lösungsmittelfreien, verzweigungsarmen Polycarbonaten, ausgehend von aromatischen Diphenolen, Kohlensäurediarylestern, Katalysatoren und gegebenenfalls Verzweigern bei Temperaturen zwischen 80°C und 400°C und Drücken von 1000 mbar bis 0,01 mbar, das dadurch gekennzeichnet ist, daß man für die erste Stufe, die Oligocarbonatsynthese, Stickstoff- oder Phosphorbasen in Mengen von $10^{-2}$ bis $10^{-8}$ mol, bezogen auf 1 mol Diphenol, einsetzt, nach Zugabe des Katalysators und Anlegen von Vakuum (von Atmospärendruck bis zu 0,5 mbar) und Erhöhung der Temperatur (bis zu 300°C) durch Abdestillieren von Monophenolen ein Oligocarbonat herstellt, und dieses in der zweiten Stufe unter Zugabe von Alkali-, und Erdalkalimetallsalzen in Mengen von $10^{-4}$ bis $10^{-8}$ mol, bezogen auf 1 mol Diphenol, bei Temperaturen zwischen 250°C bis 400°C, bevorzugt von 275°C bis 360°C und Drücken von < 500 mbar bis 0,01 mbar in kurzen Zeiten (< 1 Stunde) zum Polycarbonat polykondensiert, wobei das intermediär gebildete Oligocarbonat einen OH-Endgruppengehalt von >10 % und < 35 %, bevorzugt von > 15 % und < 30 % besitzt.

Die nach dem erfindungsgemäßen Verfahren hergestellten Polycarbonate sind verzweigungsarm, lösungsmittelfrei, mit heller Eigenfarbe ausgestattet und besitzen niedrige OH-Endgruppengehalte.

In dem US-P 3 442 854 werden als Katalysatoren quartäre Ammonium-/Phosphoniumverbindungen als Katalysatoren bei der Schmelzeumesterung beschrieben. In der Polykondensationsstufe wurden jedoch, um zu hochmolekularem Polycarbonat zu gelangen, Reaktionstemperaturen von > 300°C über mehrere Stunden (> 4 h) gebraucht. Diese Produkte sind nicht verzweigungsarm (s. Vergleichsbeispiel 1, 2) und die Raum-Zeit-Ausbeute ist unbefriedigend.

In der DE-OS 4 238 123 (Le A 29 275) beziehungsweise in dem US-Patent 5 340 905 wird beschrieben, daß quartäre Ammonium- oder Phosphoniumverbindungen als Katalysatoren für die Schmelzeumesterung von einer aromatischen Dihydroxyverbindung und einem Kohlensäurediester zur Herstellung von lösungsmittelfreiem, verzweigungsarmen Polycarbonat geeignet sind, wenn die Polykondensationstemperatur < 295°C und nur ein Katalysator eingesetzt wird. Das Verfahren benötigt gegenüber dem erfindungsgemäßen Verfahren längere Reaktionszeiten in der Polykondensationsphase.

In der DE-OS 4 312 390 (Le A 29 618) wird beschrieben, daß man mit Ammonium- und Phosphonium-Katalysatoren ein Oligocarbonat herstellen kann und dieses in einer zweiten Stufe in kurzen Zeiten mit Hilfe von Alkali- und Erdalkalimetallsalzen zum verzweigungsarmen, farbhellen Polycarbonat polykondensieren kann. Wird bei dieser Verfahrensweise jedoch nicht auf die OH-/Arylcarbonat-Endgruppenverhältnisse geachtet, so werden Polycarbonate mit hohen OH-Endgruppenverhältnissen erhalten (s. Vergleichsbeispiel 3), die zu einer deutlichen Verschlechterung der Produkte in der Thermoalterung führen.

Es wurde nun gefunden, daß durch Einstellen eines bestimmten OH/-Arylcarbonat-Endgruppenverhältnisses der intermediär gebildeten Oligocarbonate und durch die Zweistufenkatalyse bei intensiver Oberflächenerneuerung ein verzweigungsarmes, OH-endgruppenarmes Polycarbonat in kurzen Polykondensationszeiten erhalten werden kann.

Verzweigungsarm im Sinne des erfindungsgemäßen Verfahrens heißt, daß der Gehalt an Verzweiger der Formel (I):

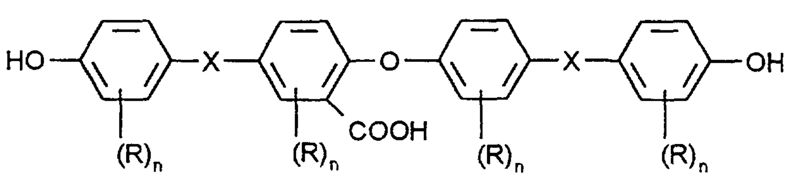

(I)

mit X = $C_1$ - $C_8$ Alkyliden oder Cycloalkyliden, S oder eine Einfachbindung und R = $CH_3$, Cl oder Br und n Null, 1 oder 2 ist,
im Polycarbonat einen Wert nach Totalverseifung und HPLC-Bestimmung von 75 ppm nicht übersteigt.

Für das erfindungsgemäße Verfahren geeignete Diphenole sind solche der Formel (II):

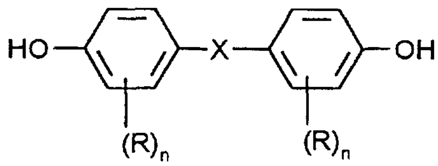

(II)

worin X, R und n die für die Formel (I) genannte Bedeutung haben.

Bevorzugte Diphenole sind z. B.:

4,4'-Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Besonders bevorzugte Diphenole aus den vorstehend genannten sind 2,2-Bis-(4-hydroxyphenyl)-propan und 1,1-Bis-(4-hydroxyphenyl)-3,3,5-trimethylcyclohexan.

Kohlensäurediester im Sinne vorliegender Erfindung sind Di-$C_6$-$C_{20}$-Arylester, vorzugsweise die Diester von Phenol oder alkylsubstituierten Phenolen, also Diphenylcarbonat oder z. B. Dikresylcarbonat. Bezogen auf 1 mol Bisphenpol werden die Kohlensäurediester in 1,01 bis 1,30 mol, bevorzugt in 1,02 bis 1,15 mol eingesetzt.

Es ist darauf zu achten, daß die Reaktionskomponenten für die erste Stufe (Oligocarbonatsynthese), also die Diphenole und die Kohlensäurediarylester frei von Alkali- und Erdalkaliionen sind, wobei Mengen von kleiner 0,1 ppm an Alkali- und Erdalkaliionen toleriert werden können. Derart reine Diphenole bzw. Diphenole sind erhältlich, indem man die Kohlensäurediarylester bzw. Diphenole umkristallisiert, wäscht und/oder destilliert. Beim erfindungsgemäßen Verfahren soll der Gehalt an Alkali- und Erdalkalimetallionen sowohl im Diphenol als auch im Kohlensäurediester einen Wert von < 0,1 ppm haben. Der Gesamtgehalt an Chlor der Rohstoffe sollte einen Wert von 2 ppm nicht übersteigen und der Gehalt an verseilbarem Chlor des Kohlensäurediesters einen Wert von 0,05 ppm nicht übersteigen. Für die Farbe (YI-Wert) des resultierenden Polycarbonats ist es von Vorteil, wenn die Rohstoffe, also die Diphenole und/oder die Kohlensäurediarylester, im Falle einer destillativen Reinigung der Rohstoffe im letzten Schritt der Herstellung, die feste Phase nicht durchlaufen haben, und direkt als Schmelze für die Umesterungsreaktion eingesetzt werden (Vergleiche Beispiele 3 bis 8).

Die Polycarbonate können durch den Einsatz geringer Mengen Verzweiger bewußt und kontrolliert verzweigt werden. Einige geeignete Verzweiger sind:

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,4-Bis-(4',4''-dihydroxytriphenyl)-methyl)-benzol und insbesondere.
a,a',a''-Tris-(4-hydroxyphenyl)-1,3,5-triisopropylbenzol

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 mol%, bezogen auf eingesetzte Diphenole, an Verzweigern, können mit den Diphenolen zusammen eingesetzt werden.

Für die Oligocarbonatsynthese werden Stickstoff- und Phosphor-Basen als Katalysatoren eingesetzt, bevorzugt Ammonium- und Phosphoniumkatalysatoren (s. 3, 4) sowie Guanidin- und Phoshazen-Basen.

Bevorzugte Katalysatoren im Sinne des erfindungsgemäßen Verfahren für die Herstellung der Oligocarbonatstufe sind Verbindungen der allgemeinen Formeln (III) und (IV):

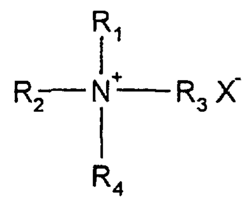

(III)

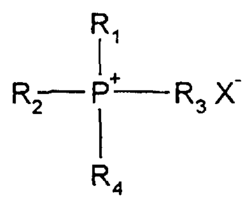

(IV)

wobei $R_{1-4}$ dieselben oder verschiedene $C_1$-$C_{20}$-Alkyle, $C_6$-$C_{18}$-Aryle oder $C_3$-$C_{20}$-Cycloalkyle sein können und $X^-$ ein Anion sein kann, bei dem das korrespondierende Säure-Base-Paar $H^+ + X^- \Leftrightarrow HX$ einen $pKB_B$ von < 11 besitzt.

Katalysatoren im Sinne des erfindungsgemäßen Verfahren sind beispielsweise:

Tetramethylammoniumhydroxid, Tetramethylammoniumacetat, Tetramethylammoniumfluorid, Tetramethylammoniumtetraphenylboranat, Tetraphenylphosphoniumfluorid, Tetraphenyl- phosphoniumtetraphenylboranat, Dimethyldiphenylammoniumhydoxid, Tetraethylammonium- hydroxid, DBU, DBN oder Guanidinsysteme wie beispiesweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexyliden-di-1,5,7-triazabicyclo-[4,4,0]-dec-5-en, 7,7'-Decyliden-di-1,5,7-triazabicyclo-[4,4,0]-dec-5-en, 7,7'-Dodecyliden-di-1,5,7-triazabicyclo-[4,4,0]-dec-5-en oder Phosphazene wie beispielsweise das Phosphazen-Base $P_1$-t-Oct = tert.-Octyl-imino-tris-(dimethylamino)-phosphoran, Phosphazen-Base $P_1$-t-Butyl = tert.-Butylimino-tris-(dimethylamino)-phosphoran, BEMP = 2-tert.-Butylimino-2-diethylamino-1,3-dimethyl-perhydro-1,3-diaza-2-phosphorin

Diese Katalysatoren werden in Mengen von $10^{-2}$ bis $10^{-8}$ mol, bezogen auf 1 mol Diphenol, eingesetzt. Die Katalysatoren können auch in Kombination (zwei oder mehrere) miteinander eingesetzt werden. Die in der ersten Stufe eingesetzten Katalysatoren sind flüchtige Substanzen, die nach Oligokondensation nicht mehr im Oligocarbonat nachweisbar sind.

Die Oligocarbonate der ersten Stufe weisen mittlere Molekulargewichte $M_w$ von 9000 - 24000, bevorzugt 12000 - 20000 auf, ermittelt durch Messung der rel. Lösungsviskosität in Dichlormethan oder in Mischungen gleicher Gewichtsmengen Phenol/o-Dichlorbenzol geeicht durch Lichtstreuung. Die Molekulargewichte der Oligocarbonate der 1. Stufe richten sich danach, wie die gewünschte Endviskoität der Polycarbonate sein soll; so werden durch die Kondensation von niedrigmolekularen Oligocarbonaten niedrigmolekulare Polycarbonate in der 2. Stufe erhalten und durch die Kondensation von höhermolekularen Oligocarbonaten höhermolekulare Polycarbonate erhalten. Die so hergestellten Oligocarbonate müssen ein OH-Endgruppengehalt

$$X\ \% = \frac{\text{Zahl der OH-Endgruppen}}{\text{Gesamtzahl der Endgruppen}} * 100$$

von > 10 % und < 35 %, bevorzugt von > 15 % und < 30 % haben.

Das OH/Arylcarbonat-Endgruppenverhältnis der Oligocarbonate wurde durch getrennte Bestimmung der OH-Endgruppen mittels photometrische Bestimmung mit $TiCl_4$ einerseits sowie Ermittlung der Arylcarbonat-Endgruppen durch HPLC-Bestimmung des nach Totalverseifung gebildeten Monophenols andererseits ermittelt.

Die Temperatur zur Herstellung dieser Oligocarbonate liegt zwischen 100°C - 300°C, bevorzugt zwischen 150°C und 280°C. Die bei der Umesterung zum Oligocarbonat entstehenden Monophenole werden durch Anlegen von Vakuum von 1 bar bis 0,5 mbar, bevorzugt < 500 mbar bis 1 mbar, entfernt.

In der zweiten Stufe, der Polykondensation des Oligocarbonats, wird durch Zugabe eines Alkali- /Erdalkalimetallkatalysators in das Oligocarbonat und durch weiteres Erhöhen der Temperatur auf 250 - 400°C, bevorzugt auf Temperaturen von 275 - 360°C, ganz besonders bevorzugt auf Temperaturen von 280°C bis 320°C und einem Druck < 500 mbar bis 0,01 mbar das verzweigungsarme Polycarbonat hergestellt.

Die Alkali-/ Erdalkalimetallkatalysatoren werden in Mengen von $10^{-4}$ bis $10^{-8}$ Mol bezogen auf 1 Mol Diphenol, besonders bevorzugt in einer Konzentration von $10^{-5}$ bis $10^{-7}$ Mol eingesetzt. Es sind beispielsweise die Lithium-, Natrium-, Kalium-, Cäsium-, Calzium-, Barium-, Magnesium-, -hydroxide, -carbonate, -halogenide, - phenolate, -diphenolate, -fluoride, -acetate, -phosphate, -hydrogenphosphate und boranate, oder allgemeiner gefaßt alle $M_x^{n+} X_y^{n-}$ mit $x \cdot n^+ + yn^- = O$ und $X^{n-}$ ein Anion ist, bei dem das korrespondierende Säure-Base-Paar $H^+ + X^- \Leftrightarrow HX$ einen $pK_B$-Wert von <11 besitzt.

Die Zugabe des Alkali-/ Erdalkalimetallkatalysators kann z. B. als Feststoff oder als Lösung/masterbatch z. B. in Wasser, Phenol, Diarylcarbonat, Oligocarbonat, Polycarbonat erfolgen.

Die Reaktion der aromatischen Dihydroxyverbindung und des Kohlensäurediesters kann im Sinne des erfindungsgemäßen 2-Stufen-Verfahrens kontinuierlich oder diskontinuierlich beispielsweise in Rührkesseln, Dünnschichtverdampfern, Rührkesselkaskaden, einfachen Scheibenreaktoren und Hochviskosscheibenreaktoren durchgeführt werden.

Der letzte Schritt, die Polykondensation, wird bevorzugt in kurzen Zeiten < 1h, bevorzugt < 30 min, besonders bevorzugt < 15 min und insbesondere < 10 min durchgeführt. Hierfür eignen sich Hochviskosreaktoren, insbesondere Schnecken-Knetermaschinen z. B. eine ZSK.

Die aromatischen Polycarbonate des erfindungsgemäßen Verfahrens sollen mittlere Gewichtsmolmassen $M_w$ von 18000 bis 60000 vorzugsweise 19000 - 40000 haben, ermittelt durch Messung der rel. Lösungsviskosität in Dichlormethan oder in Mischungen gleicher Gewichtsmengen Phenol/o-Dichlorbenzol geeicht durch Lichtstreuung.

Dies wird dadurch erreicht, daß bevorzugt niedrigmolekulare Oligocarbonate durch Monophenoldestillation zu niedrigviskoseren Polycarbonaten und höhermolekulare Oligocarbonate zu höherviskosen Polycarbonaten polykondensiert werden.

Die OH-Endgruppengehalte der Polycarbonate liegen < 20%, bevorzugt < 15 %, besonders bevorzugt < 10 % und ganz besonders bevorzugt < 5 %.

Die Oligocarbonate können auch isoliert, z, B granuliert und anschließend in einem separaten Schritt polykondensiert werden.

Zur Begrenzung der mittleren Gewichtsmolmassen $M_w$ der Polymeren können in bekannter Weise (EP 360 578) Molmassenregler, wie beispielsweise Alkylphenol, in den berechneten Mengen eingesetzt werden.

Zur Verbesserung der Eigenschaften können den erfindungsgemäß hergestellten Polycarbonaten Hilfs- und Verstärkungsstoffe zugemischt werden. Als solche sind u. a. in Betracht zu ziehen: Stabilisatoren, Fließhilfsmittel, Entformungsmittel, Brandschutzmittel, Pigmente, fein zerteilte Mineralien, Faserstoffe, z. B. Alkyl- und Arylphosphite, -phosphate, -phosphane, niedermolekulare Carbonsäureester, Halogenverbindungen, Salze, Kreide, Quarzmehl, Glas- und Kohlenstoffasern.

Weiterhin können den erfindungsgemäßen Polycarbonaten auch andere Polymere zugemischt werden, z. B. Polyolefine, Polyurethane oder Polystryrole.

Der Zusatz dieser Stoffe erfolgt vorzugsweise auf herkömmlichen Aggregaten zum fertigen Polycarbonat, kann jedoch, je nach den Erfordernissen, auf einer anderen Stufe des erfindungsgemäßen Verfahrens erfolgen.

Darüber hinaus ist für besondere Anwendungen auch die Modifizierung der Polycarbonate durch Einkondensation von Blöcken, Segmenten und Comonomeren möglich, z. B. von Siloxanblöcken mit OH-Endgruppen, von aromatischen und aliphatischen Polyester mit OH- und Carbonsäure-Endgruppen, von Polyphenylensulfid-Blöcken mit OH-Endgruppen und von Polyphenylenoxid-Blöcken mit OH-Endgruppen.

## Beispiele

### Vergleichsbeispiel 1:

In einem 500 ml Dreihalskolben mit Rührer, Innenthermometer und Vigreuxkolonne (30 cm, verspiegelt) mit Brücke werden 114,15 g (0,500 mol) Bisphenol A und 113,54 g (0,530 mol) Diphenylcarbonat eingewogen. Die Apparatur wird durch Anlegen von Vakuum und Spülen mit Stickstoff (3 mal) vom Luftsauerstoff befreit und das Gemisch auf 150°C aufgeheizt. Jetzt werden werden 0,0039 g $N(CH_3)_4B(C_6H_5)_4$ ($2*10^{-3}$ Mol%) bezogen auf Bisphenol A, als Feststoff eingesetzt, und das entstehende Phenol bei 100 mbar abdestilliert. Gleichzeitig wird die Temperatur bis auf 250°C gesteigert. Nach 1 Stunde wird das Vakuum auf 10 mbar verbessert. Durch Absenken des Vakuums auf 0,5 mbar und Temperaturerhöhung auf 310°C wird die Polykondensation in 4 h erreicht. Man erhält ein farbhelles, lösungsmittelfreies Polycarbonat mit einer rel. Lösungsviskosität von 1,276 (Dichlormethan, 25°C, 5 g/l). Der Gehalt an Verzweiger der Formel 5 im hergestellten Polycarbonat beträgt 210 ppm.

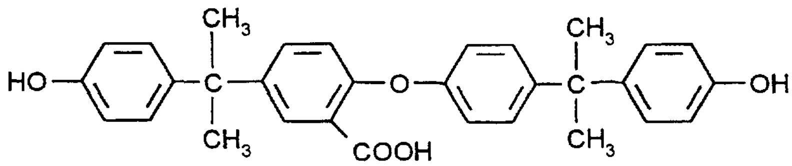 (V)

**Vergleichsbeispiel 2:**

Wie Vergleichsbeispiel 1, nur die Polykondensationstemperatur beträgt 320°C. Man erhält ein farbhelles, lösungsmittelfreies Polycarbonat mit einer rel. Lösungsviskosität von 1,335 (Dichlormethan, 25°C, 5 g/l). Der Gehalt an Verzweiger der Formel 5 im hergestellten Polycarbonat beträgt 410 ppm.

**Beispiel 1:**

5130 g (22,5 Mol) Bisphenol A, 5104 g (23,85 Mol) Diphenylcarbonat und 148 mg $PPh_4BPh_4$ ($1*10^{-3}$ Mol%) werden in einem 25 l Rührbehälter eingewogen. Der Behälter wird mit Stickstoff inertisiert und die Rohstoffe werden durch Aufheizen auf 200°C in 15 Minuten aufgeschmolzen . Bei einer Massetemperatur von 100°C wird der Rührer eingeschaltet und ein Vakuum von 300 mbar angelegt. Die Temperatur wird eine Stunde bei 200°C gehalten und freigesetztes Phenol über eine Kolonne abdestilliert. Innerhalb einer weiteren Stunde wird die Temperatur auf 250°C erhöht und das Vakuum auf 100 mbar und anschließend bei 250°C in 30 Minuten auf 5 mbar verbessert. Nach Belüften mit Stickstoff wird das Oligocarbonat aus dem Kessel ausgetragen und granuliert. Man erhält ein Oligocarbonat mit einer rel. Lösungsviskosität von 1,156 (Dichlormethan, 25°C, 5 g/l). Der phenolisch OH-Gehalt dieses Oligocarbonats beträgt 930 ppm bzw. 22 %. Nach Auftrudeln von $5*10^{-4}$ Mol% Natriumphenolat auf das Oligocarbonat wird auf einer ZSK 32 (100 Upm; 280°C; 4,5 kg/h) mit einer Verweilzeit von 2 min polykondensiert. Die relative Lösungsviskosität des so isolierten Polycarbonats beträgt 1,286 (Dichlormethan, 25°C, 5 g/l), der Gehalt an Verzweiger der Formel (5) beträgt 14 ppm und der OH-Endgruppengehalt beträgt 260 ppm bzw. 11 %.

**Beispiel 2:**

Wie Beispiel 1, nur es werden 89,2 mg $NMe_4BPh_4$ ($1*10^{-3}$ Mol%) eingewogen. Man erhält ein Oligocarbonat mit einer rel. Lösungsviskosität von 1,164 (Dichlormethan, 25°C, 5 g/l) und einem phenolisch OH-Gehalt von 830 ppm bzw. 20%. Der Gehalt an Verzweiger der Formel 5 im hergestellten Oligocarbonat beträgt < 2 ppm. Nach Belüften bei 290°C werden 7,8 mg Natriumphenolat ($3*10^{-4}$ Mol%) zugegeben, und das Oligocarbonat wie im Beispiel 1 beschrieben polykondensiert. Die relative Lösungsviskosität des isolierten Polycarbonats beträgt 1,295 (Dichlormethan, 25°C, 5 g/l), der Gehalt an Verzweiger der Formel (5) beträgt 16 ppm und der phenolische OH-Gehalt 210 ppm bzw. 9%.

**Vergleichsbeispiel 3:**

Wie Beispiel 1, nur es werden 5130 g (22,5 mol) Bisphenol A, 5013 g (23,43 mol) Diphenylcarbonat. Nach Belüften mit Stickstoff wird das Oligocarbonat aus dem Kessel ausgetragen und granuliert. Man erhält ein Oligocarbonat mit einer rel. Lösungsviskosität von 1,171 (Dichlormethan, 25°C, 5 g/l). Der phenolisch OH-Gehalt dieses Oligocarbonats beträgt 1800 ppm bzw. 46 %. Nach Auftrudeln von $5*10^{-4}$ Mol% Natriumphenolat auf das Oligocarbonat wird auf einer ZSK 32 (100 Upm; 280°C; 4,5 kg/h) mit einer Verweilzeit von 2 min polykondensiert. Die relative Lösungsviskosität des so isolierten Polycarbonats beträgt 1,322 (Dichlormethan, 25°C, 5 g/l), der Gehalt an Verzweiger der Formel (5) beträgt 24 ppm und der OH-Endgruppengehalt beträgt 750 ppm bzw. 36 %.

**Beispiel 3 bis 8:**

In einer halbtechnischen Versuchsanlage können die Rohstoffe Diphenylcarbonat und Bisphenol A in mehreren Behältern separat oder gemeinsam nach Inertisierung mit Stickstoff aufgeschmolzen werden. Weiter ist die Übernahme flüssig angelieferter Rohstoffe möglich. Die Schmelzen können separat bzw. als Gemisch kontinuierlich dosiert werden.

Bei separater Dosierung werden 49,37 kg BPA/h und 52,83 kg DPC/h, als Gemisch 102,2 kg Schmelze (aus 175 Gew.Teilen BPA und 187,25 Gew.-Teilen DPC)/h gefördert.

Als Katalysator wird $PPh_4BPh_4$ als 1 %ige Lösung in Phenol vor Eintritt in die Reaktoren kontinuierlich zugemischt (142 g Lösung/h, entspricht $1*10^{-3}$ Mol-%).

Die Schmelze wird über einen Wärmetauscher auf 190°C erwärmt und nach 20 min Verweilzeit über einen Röhrenverdampfer in einen unter einem Vakuum von 150 mbar stehenden Abscheider mit Rührer entspannt und gleichzeitig auf 240°C aufgeheizt. Die Verweilzeit im Abscheider beträgt 25 min. Die Brüden werden über eine Kolonne in einen Kondensator geleitet. Aus dem Abscheider wird das Oligocarbonat in einen Scheibenreaktor gefördert. Die Temperatur wird auf 280°C und das Vakuum auf 1,5 mbar eingestellt. Die Verweilzeit beträgt 35 mm. Das entstandene Oligocarbonat wird kontinuierlich mit $5*10^{-4}$ Mol-% Natriumphenolat als Katalysator in Form eines 0,1 gew.-%iges Masterbatch in Polycarbonat (126 g/h) versetzt und in einen Zweiwellenkneter (ZSK 57) gefördert. Unter 0,2 mbar und bei Temperaturen von 310°C erfolgt bei 100 Upm die Aufkondensation zu hochmolekularem Polycarbonat. Die Verweilzeit beträgt 3 min. In beiden Fällen werden die Brüden in gekühlte Abscheider geleitet. Das entstandene Polycarbonat wird als Borste abgezogen und granuliert.

| Versuch | BPA | DPC | $\eta_{rel}$ Oligo-carbonat | -OH [ppm] | -OH in Mol-% der End-gruppen | $\eta_{rel}$ Polycarbonat | -OH [ppm] | -OH in Mol-% der Endgruppen | Verzweiger Formel (5) [ppm] | YI |
|---|---|---|---|---|---|---|---|---|---|---|
| 3 | separat aufgeschmolzen (170°C) | separat aufgeschmolzen (110°C) | 1,205 | 960 | 29 | 1,281 | 260 | 11 | 26 | 5,4 |
| 4 | flüssig übernommen (170°C) | flüssig übernommen (110°C) | 1,210 | 790 | 24 | 1,283 | 190 | 8 | 11 | 0,9 |
| 5 | flüssig übernommen (170°C) | separat aufgeschmolzen (110°C) | 1,206 | 1020 | 31 | 1,279 | 295 | 12 | 21 | 1,7 |
| 6 | separat aufgeschmolzen (170°C) | flüssig übernommen (110°C) | 1,208 | 820 | 25 | 1,280 | 320 | 13 | 30 | 4,9 |
| 7 | gemeinsam mit DPC aufgeschmolzen (150°C) | - | 1,203 | 910 | 27 | 1,281 | 315 | 13 | 18 | 1,8 |
| 8 | festes BPA, mit Stickstoff inertisiert, in DPC-Schmelze aufgelöst (140°C) | separat aufgeschmolzen (140°C) | 1,208 | 830 | 25 | 1,282 | 270 | 11 | 13 | 1,3 |

## Patentansprüche

1. 2-Stufen-Verfahren zur Herstellung von verzweigungsarmen Polycarbonat durch Schmelzeumesterung von Diphenolen, Kohlensäurediarylestern, Katalysatoren und gegebenenfalls Verzweigern bei Temperaturen zwischen 80°C und 400°C und Drücken von 1000 mbar bis 0,01 mbar, **dadurch gekennzeichnet, daß** man für die erste Stufe, die Oligocarbonatsynthese, Stickstoff- oder Phosphorbasen in Mengen von $10^{-2}$ bis $10^{-8}$ mol, bezogen auf 1 mol Diphenol, einsetzt und nach Zugabe des Katalysators und Anlegen von Vakuum (von Atmospärendruck bis zu 0,5 mbar) und Erhöhung der Temperatur (bis zu 300°C) durch Abdestillieren von Monophenolen ein Oligocarbonat herstellt, und dieses in der zweiten Stufe unter Zugabe von Alkali-, und Erdalkalimetallsalzen in Mengen von $10^{-4}$ bis $10^{-8}$ mol, bezogen auf 1 mol Diphenol, bei Temperaturen zwischen 250°C bis 400°C und Drücken von < 500 mbar bis 0,01 mbar in kurzen Zeiten (< 1 Stunde) zum Polycarbonat polykondensiert, wobei das intermediär gebildete Oligocarbonat ein OH-Endgruppengehalt von >10 % und < 35 %, besitzt.

2. Verfahren zur Herstellung von aromatischem Polycarbonat in der Schmelze gemäß Anspruch 1, **dadurch gekennzeichnet, daß** der Gehalt an Verzweigerstruktur der Formel (I)

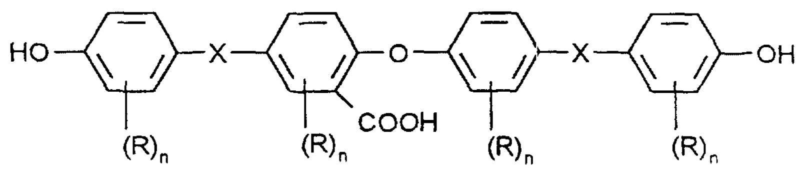

(I)

mit X = $C_1$ - $C_8$ Alkyliden oder Cycloalkyliden, S oder eine Einfachbindung und R = $CH_3$, Cl oder Br und n Null, 1 oder 2 ist,
im Polycarbonat einen Wert nach Totalverseifung und HPLC-Bestimmung von 75 ppm nicht übersteigt.

3. Verfahren zur Herstellung von aromatischem Polycarbonat in der Schmelze gemäß Anspruch 1, **dadurch gekennzeichnet, daß** der Gehalt an phenolischen OH-Endgruppen im Polycarbonat von < 20 % liegen.

4. Verfahren zur Herstellung von aromatischem Polycarbonat in der Schmelze gemäß Anspruch 1, **dadurch gekennzeichnet, daß** die Polykondensation in kurzen Zeiten < 15 min durchgeführt wird

5. Verfahren zur Herstellung von aromatischem Polycarbonat in der Schmelze gemäß Anspruch 1, **dadurch gekennzeichnet, daß** die Polykondensation in einem Hochviskosreaktor in < 10 min durchgeführt wird.

6. Verfahren zur Herstellung von aromatischem Polycarbonat in der Schmelze gemäß Anspruch 1, **dadurch gekennzeichnet, daß** die Polykondensation in einer ZSK in < 10 min durchgeführt wird.

7. Verfahren zur Herstellung von aromatischem Polycarbonat in der Schmelze gemäß Anspruch 1, **dadurch gekennzeichnet, daß** das Oligocarbonat isoliert wird und anschließend polykondensiert wird.

8. Verfahren zur Herstellung von aromatischem Polycarbonat in der Schmelze gemäß Anspruch 1, **dadurch gekennzeichnet, daß** die eingesetzten Diphenole nach ihrer Herstellung/Reinigung die feste Phase nicht durchlaufen haben.

9. Verfahren zur Herstellung von aromatischem Polycarbonat in der Schmelze gemäß Anspruch 1, **dadurch gekennzeichnet, daß** die eingesetzten Kohlensäurediarylester nach ihrer Herstellung/Reinigung die feste Phase nicht durchlaufen haben.

10. Verfahren zur Herstellung von aromatischem Polycarbonat in der Schmelze gemäß Anspruch 1, **dadurch gekennzeichnet, daß** die eingesetzten Diphenople und die eingesetzten Kohlensäurediarylester nach ihrer Herstellung/ Reinigung die feste Phase nicht durchlaufen haben.

## Claims

1. Two-stage process for the production of low-branched polycarbonate, by melt transesterification of diphenols, carbonic acid diaryl esters, catalysts and optionally branching agents at temperatures of between 80°C and 400°C and pressures of 1000 mbar to 0.01 mbar, **characterised in that** for the first stage, oligocarbonate synthesis, nitrogen or phosphorus bases are used in amounts of $10^{-2}$ to $10^{-8}$ mol, relative to 1 mol diphenol, and after addition of the catalyst and application of vacuum (from atmospheric pressure to 0.5 mbar) and raising of the temperature (up to 300°C), an oligocarbonate is produced by removal of monophenols by distillation, and the oligocarbonate is polycondensed in the second phase to yield the polycarbonate with the addition of alkali metal salts and alkaline earth metal salts in amounts of $10^{-4}$ to $10^{-8}$ mol, relative to 1 mol diphenol, at temperatures of between 250°C and 400°C and pressures of <500 mbar to 0.01 mbar in short times (<1 hour), wherein the oligocarbonate formed as an intermediate has an OH end-group content of >10% and <35%.

2. Process for the production of aromatic polycarbonate in the melt according to Claim 1, **characterised in that** the content of the branching structure of formula (I)

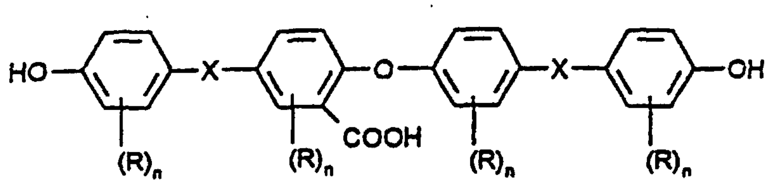

(I)

where X = $C_1$-$C_8$ alkylidene or cycloalkylidene, S or a single bond and R = $CH_3$, Cl or Br and n is zero, 1 or 2, in the polycarbonate does not exceed a value of 75 ppm according to HPLC determination after total saponification.

3. Process for the production of aromatic polycarbonate in the melt according to Claim 1, **characterised in that** the content of phenolic OH end-groups in the polycarbonate is <20%.

4. Process for the production of aromatic polycarbonate in the melt according to Claim 1, **characterised in that** the polycondensation is performed in short times of <15 min.

5. Process for the production of aromatic polycarbonate in the melt according to Claim 1, **characterised in that** polycondensation is performed in a high-viscosity reactor in <10 min.

6. Process for the production of aromatic polycarbonate in the melt according to Claim 1, **characterised in that** the polycondensation is performed in a ZSK twinscrew kneader in <10 min.

7. Process for the production of aromatic polycarbonate in the melt according to Claim 1, **characterised in that** the oligocarbonate is isolated and thereafter polycondensed.

8. Process for the production of aromatic polycarbonate in the melt according to Claim 1, **characterised in that** the diphenols used have not passed through the solid phase after the production/purification thereof.

9. Process for the production of aromatic polycarbonate in the melt according to Claim 1, **characterised in that** the carbonic acid diaryl esters used have not passed through the solid phase after the production/ purification thereof.

10. Process for the production of aromatic polycarbonate in the melt according to Claim 1, **characterised in that** the diphenols used and the carbonic acid diaryl esters used have not passed through the solid phase after the production/purification thereof.

## Revendications

1. Procédé en deux étapes de préparation de polycarbonates pauvres en ramification, par transestérification à l'état fondu de diphénols, de diesters aryliques d'acide carbonique, de catalyseurs et facultativement, d'agents de ramification, à des températures située dans la gamme allant de 80°C à 400°C et à des pressions allant de 1000

mbar à 0,01 mbar, qui est **caractérisé en ce que** l'on met en oeuvre dans. la première étape, la synthèse de l'oligocarbonate, des bases azotées ou phosphorées en des quantités situées dans l'intervalle allant de $10^{-2}$ à $10^{-8}$ mole, sur base de 1 mole de diphénol, après addition du catalyseur et application du vide (de la pression atmosphérique jusqu'à 0,5 mbar) et augmentation de la température (jusqu'à 300°C), on prépare par distillation des monophénols un oligocarbonate, et celui-ci est polycondensé dans la deuxième étape par addition de sels de métaux alcalin et alcalino-terreux en des quantités allant de $10^{-4}$ à $10^{-8}$ moles, sur base de 1 mole de diphénol, à des températures situées dans l'intervalle allant de 250°C à 400°C et des pressions allant de < 500 mbar à 0,01 mbar pendant de courtes périodes (< 1 heure) en polycarbonate, où l'oligocarbonate intermédiaire formé présente une teneur en radicaux OH terminaux > 10% et < 35%.

2. Procédé de préparation à l'état fondu de polycarbonates aromatiques suivant la revendication 1, **caractérisé en ce que** la teneur en agent de ramification de formule (I) :

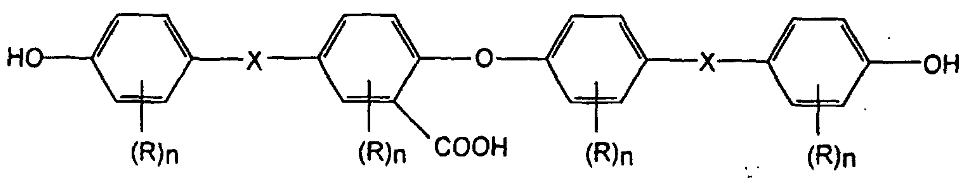
(I)

avec X = alcoylidène ou cycloalcoylidène en $C_1$-$C_8$, S ou une simple liaison, R = $CH_3$, Cl ou Br et n est zéro, 1 ou 2,

dans le polycarbonate ne dépasse pas une valeur, après saponification totale et détermination par HPLC, de 75 ppm.

3. Procédé de préparation à l'état fondu de polycarbonates aromatiques suivant la revendication 1, **caractérisé en ce que** la teneur en radicaux OH phénoliques terminaux dans le polycarbonate est < 20%.

4. Procédé de préparation à l'état fondu de polycarbonates aromatiques suivant la revendication 1, **caractérisé en ce que** la polycondensation est réalisée pendant de courtes périodes, < 15 minutes.

5. Procédé de préparation à l'état fondu de polycarbonates aromatiques suivant la revendication 1, **caractérisé en ce que** la polycondensation est réalisée dans un réacteur à haute viscosité en < 10 minutes.

6. Procédé de préparation à l'état fondu de polycarbonates aromatiques suivant la revendication 1, **caractérisé en ce que** la polycondensation est réalisée dans un ZSK en < 10 minutes.

7. Procédé de préparation à l'état fondu de polycarbonates aromatiques suivant la revendication 1, **caractérisé en ce que** l'oligocarbonate est isolé et ensuite, polycondensé.

8. Procédé de préparation à l'état fondu de polycarbonates aromatiques suivant la revendication 1, **caractérisé en ce que** les diphénols mis en oeuvre ne repassent pas à l'état solide après leur préparation/purification.

9. Procédé de préparation à l'état fondu de polycarbonates aromatiques suivant la revendication 1, **caractérisé en ce que** les esters diaryliques d'acide carbonique mis en oeuvre ne repassent pas à l'état solide après leur préparation/purification.

10. Procédé de préparation à l'état fondu de polycarbonates aromatiques suivant la revendication 1, **caractérisé en ce que** les diphénols mis en oeuvre et les esters diaryliques d'acide carbonique mis en oeuvre ne repassent pas à l'état solide après leur préparation/purification.